Europäisches Patentamt

European Patent Office

Office européen des brevets

(11) Veröffentlichungsnummer: **0 001 771**
**B1**

(12) **EUROPÄISCHE PATENTSCHRIFT**

(21) Anmeldenummer: **78101141.6**

(22) Anmeldetag: **13.10.78**

(51) Int. Cl³: **B 23 K 25/00, B 23 K 9/18**

(54) Vorrichtung zur Ausübung des Verfahrens zum Elektroschlacke- oder Elektro-Gas-Schweissen von Metallblechen

(30) Priorität: **29.10.77 DE 2748740**

(43) Veröffentlichungstag der Anmeldung:
**16.05.79 Patentblatt 79/10**

(45) Bekanntmachung des Hinweises auf die Patenterteilung:
**23.07.80 Patentblatt 80/15**

(84) Benannte Vertragsstaaten:
**BE CH FR GB LU NL SE**

(56) Entgegenhaltungen:
**FR - A - 2 077 732**
**US - A - 2 680 798**

(73) Patentinhaber: **Eichhorn, Friedrich, Professor Dr.-Ing.**
**Fichthang 2**
**D - 5100 Aachen (DE)**

(72) Erfinder: **Hirsch, Peter, Dr.**
**Schlossweiherstrasse 3—5**
**D - 5100 Aachen Laurensberg (DE)**
**Wübbels, Berhard**
**Gemenwirthe 36**
**D - 4280 Borken 1 (DE)**
**Schäfer, Rolf**
**Am Dorbach 8.**
**D - 5100 Aachen (DE)**

(74) Vertreter: **Hansmann, Dierk**
**Jessenstrasse 4**
**D - 2000 Hamburg 50 (DE)**

## Vorrichtung zur Ausübung des Verfahrens zum Electro-Schlacke- oder Elektro-Gas-Schweißen von Metallblechen.

Die Erfindung bezieht sich auf eine Vorrichtung zur Ausübung des Verfahrens zum Elektro-Schlacke- oder Elektro-Gas-Schweißen von Metallblechen, bei denen pulverförmiger Zusatzwerkstoff in den Schweißspalt eingeführt wird.

Derartige Anordnungen sind bekannt, wobei mit Hilfe eines Gasstromes der pulverförmige Zusatzwerkstoff an die Schweißstelle geführt wird. Es hat sich gezeigt, daß vor allem bei hohen Schweißstromstäken es häufig zur Verstopfung der Pulverzuführleitung kommt.

Bei dem Verfahen nach der DE—OS 26 03 020 wird beispielsweise mit Stromstärken in der Größenordnung von 2600 A gearbeitet. Die dadurch bedingten starken Magnetfelder verlangen daher besondere Maßnahmen, um das stromlose Metallpulver als Zusatzwerkstoff innerhalb des Schweißspaltes in das Schlackenbad einzuführen. Die üliche Schwerkraftförderung reicht hier nicht mehr aus. Es sind also Pulverfördergeräte vorgesehen, die mit einem neutralen Fördergas arbeiten. Außerdem müssen die zugehörigen Schlauchleitungen mit Abstand von den Elektroden geführt werden, und auch die Zuführungsdüsen liegen nur mit ihren Mündungen in der Nähe der Schlackenbadoberfläche. Sie sind isoliert an den Stromrüsselpaaren für die Elektroden befestigt, und ihr Abstand und ihre Richtung sind mittels Halterungen einstellbar.

Um einen störungsfreien Schweißverlauf zu gewährleisten sind die Zuführungsdüsen für das Metallpulver genau mittig auf die Drahtelektrodenpaare zu richten, und sie müssen kurz oberhalb der Schlackenbadeoberfläche münden. Andernfalls können sich Kurzschlußbrücken aus Metallpulver zwischen Blechkante und den Drahtelektroden bilden. Diese Anforderung an die Genauigkeit der Metallpulverzuführung erfüllen die Düsen nur bei sorgfältigster Einstellung. Außßderdem ist diese Variante der Metallpulverzuführung begrenzt auf zwei Drahtelektrodenpaare.

Die Aufgabe der Erfindung besteht darin, bei einer gatungsmäßigen Vorrichtung die Bedienung der Schweißvorrichtung zu vereinfachen und dem störenden Einfluß der von den Elektroden ausgehenden Magnetfelder auf die Förderung des Metallpulvers zu vermeiden.

Die Lösung dieser Aufgabe erfolgt erfindungsgemäß dadurch, daß die Stromrüsselpaare eine magnetische Abschirmung aufweisen, an welcher im felderarmen Raum die Rohre befestigt sind.

Weiterhin wird in Ausgestaltung der Erfindung vorgeschlagen, daß zur magnetischen Abschirmung U-förmig gestanzte Trafobleche dienen, die, einseitig beschichtet, zu Schienen gestapelt sind, in deren Nut die Stromrüsselpaare geführt sind, wobei die Zufuhrleitungen für das Metallpulver außßen an dem Stegteil

des U-Profils befestigt sind. Diese lamellierten U-Schienen leiten das Magnetfeld bevorzugt über die freien Enden des U-Profils nach außßen und es entsteht auf der Profilrückseite ein feldarmer Raum in dem die Zuführungsrohre für das Metallpulver angeordnet sind. Die Zuführrohre münden kurz unterhalb des Drahtelektrodenaustritts aus den Stromrüsseln und können das Metallpulver an die Drahtelektroden spritzen.

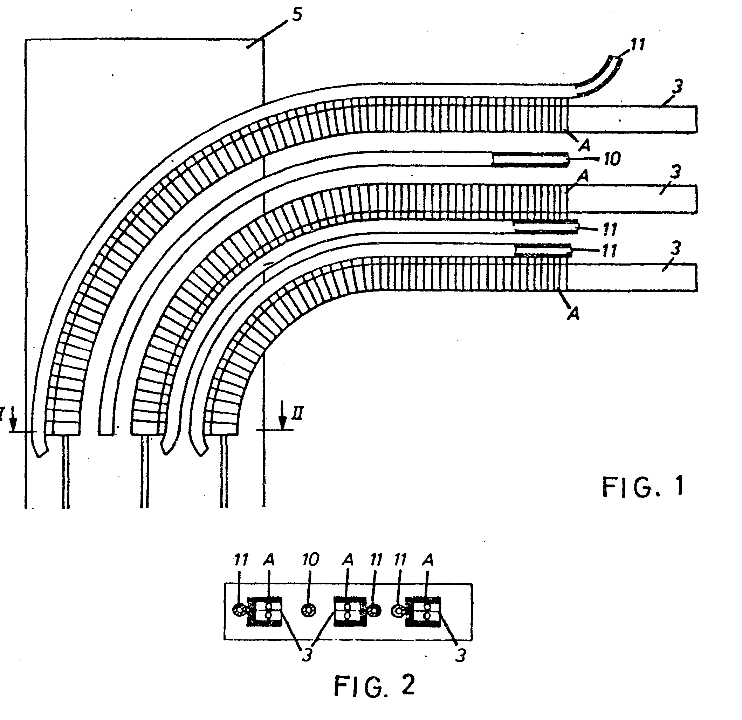

In der Zeichnung ist ein bevorzugtes Ausführungsbeispiel der Vorrichtung nach der Erfindung schematisch dargestellt.
Es zeigen
Figur 1 die Gesamtanordnung von der Seite,
Figur 2 einen Schnitt nach Linie II—II von Figur 1.

Zum Verschweißen dickerer Bleche 5 sind drei Drahtelektrodenpaare 3 erforderlich. Jedes Paar ist mit einem Zuführungsrohr 11 für Metallpulver als Zusatzwerkstoff ausgerüstet, das mit den Stromrüsseln für die Elektroden zu einer Einheit verbunden ist. Um für die Rohre 11 einen feldarmen Raum zu Schaffen, sind U-fömig gestanzte Trafobleche A zu lamellierten Schienen mit U-Profil gestapelt, in denen die Stromrüssel mit den Drahtelektroden verlaufen, wobei die Magnetfelder an den freien Kanten des U-Profils austreten. Für die Leitungen 10 für das unmagnetische Schweißpulver ist eine magnetische Abschirmung nicht erforderlich.

**Patentansprüche**

1. Vorrichtung zur Ausführung des Verfahrens zum Elektro-Schlacke- oder Elektro-Gas-Schweißen von Metallblechen, wobei pulverfömiger Zusatzwerkstoff in Rohren in den Schweißspalt eingeführt wird und Zuführungsdüsen an Stromrüsselpaaren für die Elektroden befestigt sind, dadurch gekennzeichnet, daß die Stromrüsselpaare (3) eine magnetische Abschirmung aufweisen, an welcher im felderarmen Raum die Rohre (11) befestigt sind.

2. Vorrichtung nach Patentanspruch 1, dadurch gekennzeichnet, daß zur magnetischen Abschirmung U-förmig gestanzte Trafobleche (A) dienen, die, einseitig beschichtet, zu Schienen gestapelt sind, in deren Nut die Stromrüsselpaare (3) geführt sind, wobei die Zufuhrleitungen (11) für das Metallpulver außen an dem Stegteil des U-Profils befestigt sind.

**Revendications**

1. Dispositif destiné à la mise en oeuvre du procédé de soudage électrique sous laitier ou du procédé de soudage électrique sous gaz de tôles, selon lesquels une matière d'addition sous forme pulvérulente est amenée dans des conduits, dans l'intervalle de soudage et selon lesquels les injecteurs d'amenée sont fixés aux paires de conducteurs d'arrivée de courant qui alimentent les électrodes, le dispositif étant caractérisé en ce que les paires de conducteurs d'arrivée de courant (3) sont munis d'une protection magnétique à laquelle les conduits (11) sont fixés dans l'espace pauvre en champ.

2. Dispositif suivant la revendication 1, caractérisé en ce que le pour la protection magnétique, il est prévu des tôles de transformateurs (A), estampées en U, qui, portant un revêtement d'un côte, sont empilées de façon à former des barres dans la rainure desquelles les paires de conducteurs d'arrivée de courant (3) sont guidées, les conduits d'arrivée (11) de la poudre de métal étant fixés extérieurement à la partie d'âme de l'élément profilé en U.

## Claims

1. Devise for carrying out the process of electro-slag or electro-gas welding of metal sheets in which powdered additional materials are introduced through tubes into the welding gap and supply nozzles are fixed on to pairs of current leads for the electrodes, characterised in that the pairs of current leads (3) have a magnetic screening on which the tubes (11) are fixed in the low-field space.

2. Device according to claim 1, characterised in that, for the magnetic screening, there are used U-shaped stamped core plates (A) which are coated on one side and assembled to provide channel rails in the cavity of each of which the pairs of contact leads (3) are guided, the feed tubes (11) for the metal powder being fixed externally on the bridge part of the U-shaped rails.

FIG. 1

FIG. 2